# EUROPÄISCHE PATENTSCHRIFT

(11) **EP 2 110 327 B1**
(45) Veröffentlichungstag und Bekanntmachung des Hinweises auf die Patenterteilung: **21.09.2011**
(21) Anmeldenummer: 08154771.3
(22) Anmeldetag: 18.04.2008
(51) Int. Cl.: B65B 35/16, B65G 47/90

(54) **Produktzuführung sowie entsprechendes Verfahren**
Product supply and corresponding method
Introduction de produit et procédé correspondant

(43) Veröffentlichungstag der Anmeldung: 21.10.2009
(73) Patentinhaber: THEEGARTEN-PACTEC GMBH & CO. KG, 01237 Dresden (DE)
(72) Erfinder: Oehlert, Volker, 01809 Dohna (DE)
(74) Vertreter: Moser & Götze

(56) Entgegenhaltungen:
- EP-A- 0 801 014
- EP-A- 0 872 436
- DE-A1- 3 507 656
- JP-A- 57 166 219

## Beschreibung

Die Erfindung betrifft eine Produktzuführung für die Zuführung von kleinstückigen Produkten, wie Schokoladen oder ähnlichen Süßwaren, zu einer Falteinrichtung einer Verpackungsmaschine mit einem kontinuierlichen Produktförderer, auf dem die Produkte zumindest in einem Bereich in Reihe gleichmäßig hintereinander mit oder ohne Abstand angeordnet sind, und einer zangenartigen Greifeinrichtung für das Ergreifen eines Produktes an einer vorbestimmten Position auf dem Förderer aus der Bewegung heraus und dessen Überführung an die Falteinrichtung.

Verpackungsmaschinen, die z.B. nach dem Zwei-Stempelprinzip arbeiten, fördern das zu verpackenden Produkt mit dem Packmittel durch eine taktweise arbeitende Falteinrichtung (z. B. Faltschacht) hindurch, wobei die ersten Faltungen des Packmittels um das Produkt herum erfolgen. Hierbei wird das Packmittel bzw. der jeweilige Packmittelabschnitt intermittierend zugeführt, d. h. nur zeitweise gefördert und taktweise gestoppt, wobei der einzelne Abschnitt von einer Bahn oder Ähnlichem des Packmittels abgetrennt wird. Dies ist erforderlich, da der Packmittelabschnitt etwa mittig zu dem Produkt, z. B. auf dessen Oberseite, positioniert wird, bevor das Produkt gemeinsam mit dem Packmittelabschnitt durch eine Aufnahmeeinheit (z. B. die Stempel) ergriffen und durch die Falteinrichtung hindurch bewegt wird. Die Falteinrichtung arbeitet also taktweise oder intermittierend.

Die zu verpackenden Produkte werden dabei üblicherweise in Reihe auf einem Förderband angeliefert. Dabei ist es bekannt, das Förderband entweder ebenfalls intermittierend bzw. alternierend zu betreiben oder es kontinuierlich zu bewegen.

Die Produkte werden dann üblicherweise von einem Greifer eines Greifkopfes ergriffen und an die Stempel der Falteinrichtung übergeben. Bei den Greifköpfen handelt es sich dabei um mehrere zangenartige Greifer, die um eine gemeinsame Drehachse rotieren, um die Produkte auf dem Förderband zu ergreifen und an die Stempel der Falteinrichtung zu übergeben.

Aus der EP 1 503 939 B1 ist z.B. eine Zuführvorrichtung für Schokoladentafeln und entsprechende Produkte zu einer Umhüllungsmaschine mit einer ersten Bandeinrichtung, die eine kontinuierliche Vorwärtsbewegung durchführt und eine Vielzahl von Produkten lagert und bewegt, welche in einer einzigen Reihe mit wechselseitigem Kontakt angeordnet und ausgerichtet sind, und mit einer zweiten Bandeinrichtung, die abstromseitig der ersten Bandeinrichtung angeordnet und zu dieser ausgerichtet ist sowie eine alternierende oder intermittierende Vorwärtsbewegung durchführt und einer Halteeinrichtung (Ansaugung) für die Produkte zugeordnet ist, bekannt. Die erste Bandeinrichtung dient quasi als Stauband und die zweite Bandeinrichtung als Zuteilband. Die Produkte werden durch die Vakuumerzeugung an das gelochte Band der zweiten Bandeinrichtung angesaugt, um ihre Position festzulegen.

Die Vorrichtung weist ferner ein Positionierungsrad auf, das sich um eine vertikale Achse dreht und mindestens vier Zangeneinrichtungen aufweist, die unter einem Winkel von 90° zueinander angeordnet und am Rad mit einer Orientierung nahezu tangential zum Umfang des Positionierungsrades angeordnet sind, wobei das Positionierungsrad der zweiten Bandeinrichtung unmittelbar abstromseitig der Halteeinrichtung gegenüberliegt und die zweite Bandeinrichtung die Produkte mit Abstand aus einem Aufnahmezustand (A), bei dem die zweite Bandeinrichtung die Produkte von der ersten Bandeinrichtung empfängt, über Bewegungszustände (M), in denen die Halteeinrichtungen jedes Produkt an der zweiten Bandeinrichtung fixiert halten, in einen Überführungszustand (T) bewegt, in dem die zweite Bandeinrichtung bewegungslos ist und das nicht mehr an dieser fixierte Produkt von einer Zangeneinrichtung des Positionierungsrades ergriffen wird, welches das Produkt mit einer Kreisbewegung aus dem Überführungszustand in einen Freigabezustand (R) bewegt, in der das Rad bewegungslos ist und die Zangeneinrichtung zur Überführung des Produktes zur Umhüllungsmaschine geöffnet wird.

Die EP 0 801 014 B1 offenbart ein Verfahren zur Beförderung von Produkten, wie Schokoladen, bei dem ein Produkt entlang eines ersten Weges durch Mittel einer Beförderungsvorrichtung bewegt wird, wobei diese ein Antriebsmittel zum Antreiben der Beförderungsvorrichtung umfasst und der erste Weg sich durch eine Aufnahmestation hindurch erstreckt, an welcher das Produkt aufgenommen wird. Weiter wird ein Greifelement entlang eines zweiten Weges, der wenigstens an der Aufnahmestation tangential zum ersten Weg ist, bewegt und dabei das Produkt an der Beförderungsvorrichtung in einer gegebenen Position mittels eines Haltemittels (Vakuum) gesichert. Ferner wird die gegebene Position mittels einer Auffindevorrichtung, die an einer Ermittlungsstation stromauf von der Aufnahmestation entlang des ersten Wegs angeordnet ist, bestimmt und ein Positionssignal ausgesendet. Daraufhin findet eine Einstellung des Antriebsmittels auf der Basis des Positionssignals statt, so dass das Produkt gleichzeitig mit dem Greifelement zu der Aufnahmestation bewegt wird. Dort wird das Produkt von der Beförderungsvorrichtung mittels einer Lösevorrichtung (Unterbrechung der Ansaugung) gelöst, die an der Aufnahmestation angeordnet ist, um die Aufnahme des Produkts durch das Greifelement zu ermöglichen.

Problematisch ist hierbei die Änderung der Produktbewegung von der kontinuierlichen Bewegung auf dem Förderband in die intermittierende bzw. taktweise Bewegung in der Falteinrichtung. Hierbei treten Leistungsverluste, Produktschäden etc. auf, die u. a. die Zuverlässigkeit beeinträchtigen und ggf. zum Stillstand der Maschine führen.

Demgegenüber besteht die Aufgabe der vorliegenden Erfindung eine Produktzuführung bereitzustellen, die zum einen eine kontinuierliche Zuführung der Produkte und deren Übergabe an eine taktweise oder intermittierend arbeitende Falteinrichtung erlaubt und dabei eine hohe Leistung bei Produkt schonender Arbeitsweise ermöglicht. Des Weiteren sollte die Ausrichtung des Produkts bei der Übergabe wahlweise veränderbar sein und die Produktzuführung möglichst zuverlässig arbeiten sowie raumsparend ausgebildet sein.

Diese Aufgabe wird durch die in Anspruch 1 wiedergegebene Produktzuführung und dem entsprechenden in Anspruch 11 angegebenen Verfahren gelöst.

Dadurch, dass die Greifeinrichtung ausgebildet ist, um eine Hin-und-Her-Bewegung auszuführen, innerhalb derer die Greifeinrichtung in die Ausgangslage für das nächste Produkt zurückkehrt, ist es möglich, eine hohe Produktivität und Zuverlässigkeit der Produktzuführung bei einer kontinuierlichen Zuführung der Produkte und deren Übergabe an eine taktweise oder intermittierend arbeitende Falteinrichtung zu erreichen. Da auf den üblichen radförmigen Greifkopf mit mehreren Greifern verzichtet wird, ist beansprucht die Produktzuführung besonders wenig Raum und ist deutlich günstiger.

In einer besonders bevorzugten Ausführungsform umfasst die Greifeinrichtung einen mehrhebligen Mechanismus, der zum Beispiel ein mindestens fünfgliedriges Getriebe derart ausbildet, dass im Wesentlichen eine horizontale, insbesondere aber lineare Übergabebewegung des ergriffenen Produktes in Verlängerung der Förderbewegung erfolgt. Dies ermöglicht eine hohe Produktschonung, da das zugreifende Produkt in Bewegungsrichtung "weggenommen" wird. Zudem wird auch Raum eingespart, da die Falteinrichtung somit "in Reihe" mit der Produktzuführung angeordnet werden kann. Dies ermöglicht eine besonders kompakte Gestaltung der entsprechenden Verpackungsmaschine und Freiheiten bei der Anordnung der einzelnen Module der Verpackungsmaschine.

Die Greifeinrichtung weist in bekannter Weise zwei zangenartig gegenüberliegende angeordnete Greifbacken auf, die um eine horizontale Achse drehbar ausgestaltet sind. Somit kann das jeweilig ergriffene Produkt während der Übergabebewegung in seiner Ausrichtung verändert werden. Dies ermöglicht weitere Produktlagen innerhalb der Falteinrichtung. Somit können zur Realisierung unterschiedlicher Produktlagen in der intermittierend arbeitenden Verpackungsmaschine bei gleicher Ausgangslage auf dem Förderer die Entnahmegreifer drehbar ausgestaltet werden, wodurch die Produkte während sie gegriffen sind um eine horizontale Achse gedreht werden. Somit können sie ebenfalls auf der Seite liegend oder auch "über Kopf" weitergegeben werden.

Die mögliche Regelung des Förderers erfolgt in Abhängigkeit von der pro Arbeitstakt zu fördernden Produktlänge, d.h. der zurückzulegende Weg während des Greifens hängt von der Produktlänge ab, da alle Produkte gleichmäßig hintereinander angeordnet sind, also entweder lückenlos auf Kontakt oder beabstandet liegen. Durch Längentoleranzen abweichend vom Nennmaß kann eine Nachregelung erforderlich werden, wodurch entweder die gesamte Produktformation auf dem Förderer etwas beschleunigt oder verzögert werden muss. Hierzu dient ein sensorisches Meßsystem, welches die Lage des jeweiligen ersten (und zu entnehmenden) Produktes erfasst und eine entsprechende Nachregelung veranlasst. Hierbei kann z.B. ein servogeregelter Motor zum Einsatz kommen. Durch die Regelung wird gewährleistet, dass das zu entnehmende Produkt immer taktsynchron zum Verpackungsmaschinentakt positioniert und gefördert wird.

Auch bei sich ändernden Produktabmessungen (Änderung in Längsrichtung bzgl. der Reihenanordnung) ist ggf. eine Anpassung der Geschwindigkeit des Förderers über notwendig, z.B. über einen Servoantrieb.

Auch in dem mechanischen Greifsystem kann ggf. die Synchrongeschwindigkeit während des Greifens der Produkte angepasst werden. Dies kann entweder auf rein mechanischem Weg durch Änderung von Antriebskurven erreicht werden. Denkbar ist ebenfalls die Verwendung von Differenzgetrieben, durch die in bestimmten Bewegungsbereichen formatabhängige Veränderungen während des Synchronlaufs beim Greifen der Produkte erreichbar sind, während die Grundgeschwindigkeit der Verpackungsmaschine gleichbleibend ist. Eine sehr elegante Realisierung einer formatabhängig zu ändernden Synchrongeschwindigkeit kann auch bei der Greifeinrichtung durch die Verwendung eines Servoantriebes erreicht werden, welcher in bestimmten Bewegungsbereichen die Geschwindigkeitsanpassung zum Förderer je Arbeitstakt realisiert.

Eine weitere Variante zur Herstellung eines Synchronlaufes bei Formatänderungen besteht darin, die Greifeinrichtung mit einer mittleren konstanten Synchrongeschwindigkeit auszulegen und entsprechend den Förderer schwellend und damit angepasst mit der Geschwindigkeit zeitweise synchron zum Greifer zu bewegen. Dies würde mit dem ohnehin vorhandenen Servoantrieb des Zuteilbandes erfolgen können.

Somit kann eine Regelung für die Geschwindigkeit des Förderers und/oder der Greifeinrichtung vorgesehen sein, die über eine geeignete Sensorik mit Lageinformationen der Produkte versorgt wird.

In einer weiteren bevorzugten Ausführungsform ist der Förderer ein zweiteiliger Bandförderer, der eine Synchronisation ausführt. Unter Synchronisation versteht man ein 2-stufiges Bandsystem, das ein schnell laufendes Stauband und ein auf das Stauband folgendes langsamer laufendes Zuteilband umfasst. Somit werden die Produkte in Reihe "auf Stoß" lückenlos hintereinander angeordnet. Die erste Bandstufe, das Stauband, nimmt kontinuierlich Produkte von einem vorgeschalteten Zuführsystem entgegen und transportiert die Produkte bis zur zweite Bandstufe, dem Zuteilband. Die (konstante) Geschwindigkeit der ersten Bandstufe ist größer als die der zweiten Stufe (geregelte Geschwindigkeit). Hierdurch wird gewährleistet, dass auf dem Zuteilband die Produkte lückenlos auf Kontakt zueinander liegen, also gestaut werden, so dass das komplette Zuteilband mit Produkten belegt ist. Der Produktstau ragt zurück bis auf das Stauband. Das Stauende befindet sich dann zwischen festgelegten und sensorisch erfassten Grenzwerten während des kontinuierlichen Betriebs.

Alternativ kann als Förderer auch eine Kombination aus Bandförderer und Kettenmitnehmern eingesetzt werden. Die Produktvereinzelung erfolgt durch ein dem Zuteilband nachgeordnetem und vakuumunterstützten Beschleunigerband, welches eine höhere Geschwindigkeit als das Zuteilband aufweist und welches die "auf Stoß" liegenden Produkte definiert somit auseinander zieht und zwischen entsprechende Kettenmitnehmer positioniert. Die Kettengeschwindigkeit ist wiederum höher als die des Beschleunigerbandes, wodurch dann die Produkte vereinzelt an den Kettenmitnehmern angelegt werden und durch diese kontinuierlich weitergeschoben werden. Die Produkte weisen in diesem Fall konstante Abstände zueinander auf. Das jeweils vorderste Produkt in der Förderkette wird vom Greifmechanismus in der kontinuierlichen Bewegung gegriffen und dann nach vorn weg vom Kettenmitnehmer weggezogen.

Um eine weitere Produktschonung und Vereinfachung der Synchronisation der Bewegungen der Produkte und der Greifeinheit zu ermöglichen, kann der Bereich des Produktförderers, auf dem die Produkte in Reihe "auf Stoß" lückenlos hintereinander angeordnet sind, insbesondere das Zuteilband, mit einer Ansaugvorrichtung für die Erzeugung eines Vakuums versehen sein. Somit verschieben die nachschiebenden Produkte des Staubandes die Produkte auf dem Förderer nicht und die Produkte weisen gemeinsam mit dem Förderer die gleiche Geschwindigkeit (synchron) für ein sicheres Entnehmen auf. Die Ansaugvorrichtung endet dann Bevorzugterweise vor der Stelle der Ergreifung des Produktes. Somit ist eine gesonderte Regelung der Ansaugung, wie sie in der EP 0 801 014 B1 notwendig ist, unnötig. Dies ist möglich, da die auftretenden Beschleunigungen zur Ausregelung der Geschwindigkeit bei Produktlängentoleranzen (max. 1...1,5 mm) zu gering sind, um die Produkte aufgrund ihrer Massenträgheit zum Transportband asynchron zu verschieben. Durch geeignete Materialauswahl kann ein ausreichend hoher Reibwert zwischen Produkt und Transportband gewährleistet werden. Dies vereinfacht die Konstruktion erheblich.

Gemäß der Erfindung werden die Produkte auf einem Produktförderer zumindest in einem Bereich dessen in Reihe "auf Stoß" lückenlos hintereinander angeordnet und gefördert werden, das erste Produkt der Reihe von einer zangenartigen Greifeinrichtung an einer vorbestimmten Position auf dem Förderer aus der Bewegung heraus ergriffen und an die Falteinrichtung übergeben, wobei die Greifeinrichtung eine Einfachgreifeinrichtung ist, die eine zyklische Hin-und-Her-Bewegung ausführt, innerhalb derer die Greifeinrichtung sich zunächst mit gleicher Geschwindigkeit parallel zu dem zu ergreifenden ersten Produkt der Reihe bewegt (Synchronbewegung), das Produkt während dieser Synchronbewegung ergreift, das Produkt dann an die Falteinrichtung übergibt und in die Ausgangslage für das nächste Produkt zurückkehrt.

Die Greifeinheit wird mit anderen Worten im Einzeltakt auf das vorderste zu entnehmende Produkt des Förderers in seiner Geschwindigkeit aufsynchronisiert. Während der Synchronlaufphase wird dieses kontinuierlich bewegte Produkt gegriffen und in Bewegungsrichtung nach vorn, ggf. auch noch vertikal, von den nachfolgenden Produkten weggezogen und in eine intermittierende Arbeitsweise einer Verpackungsmaschine (Falteinrichtung) für Süßwaren (im Speziellen für Schokoladenartikeln) übergeben. Diese Übergabe findet innerhalb einer Rast der Falteinrichtung statt. Anschließend erfolgt der Rückhub der Greifeinheit, wodurch der Zyklus von Neuem beginnt.

Die Greifeinrichtung führt im Wesentlichen eine horizontale Übergabebewegung mit dem ergriffenen Produkt in Verlängerung der Förderbewegung aus. Zusätzlich zu der horizontalen Übergabebewegung kann jedoch auch eine vertikale Bewegung bei der Übergabe ausgeführt werden (s.o.).

Weitere Einzelheiten, Merkmale und Vorteile der Erfindung ergeben sich aus der nachfolgenden Beschreibung von Ausführungsbeispielen anhand der Zeichnung, in der
Fig. 1 eine schematische Seitenansicht einer Produktzuführung mit der Greifeinrichtung in der Ergreifungsposition zeigt;
Fig. 2 eine schematische Seitenansicht der Produktzuführung aus Fig. 1 in einer ersten Stellung der Überführungsbewegung zeigt;
Fig. 3 eine schematische Seitenansicht der Produktzuführung aus Fig. 1 in einer weiteren Stellung der Überführungsbewegung zeigt;
Fig. 4 eine schematische Seitenansicht der Produktzuführung aus Fig. 1 in der Endstellung (der Übergabeposition an die Falteinrichtung) zeigt;
Fig. 5 eine schematische Seitenansicht der Produktzuführung aus Fig. 1 in der Rückbewegung zeigt;
Fig. 6 eine schematische Seitenansicht einer weiteren Produktzuführung mit einer optionalen horizontalen Drehbewegung mit der Greifeinrichtung in der Ergreifungsposition zeigt;
Fig. 7 eine schematische Seitenansicht der Produktzuführung aus Fig. 6 in einer ersten Stellung der Überführungsbewegung zeigt;
Fig. 8 eine schematische Seitenansicht der Produktzuführung aus Fig. 6 in einer weiteren Stellung der Überführungsbewegung zeigt;
Fig. 9 eine schematische Seitenansicht der Produktzuführung aus Fig. 6 in der Endstellung (der Übergabeposition an die Falteinrichtung) zeigt;
Fig. 10 eine schematische Seitenansicht der Produktzuführung aus Fig. 6 in der Rückbewegung und die Rückdrehung der Greifelemente zeigt und
Fig. 11 eine schematische Seitenansicht einer weiteren Produktzuführung mit einem Beschleunigeband mit der Greifeinrichtung in der Ergreifungsposition zeigt.

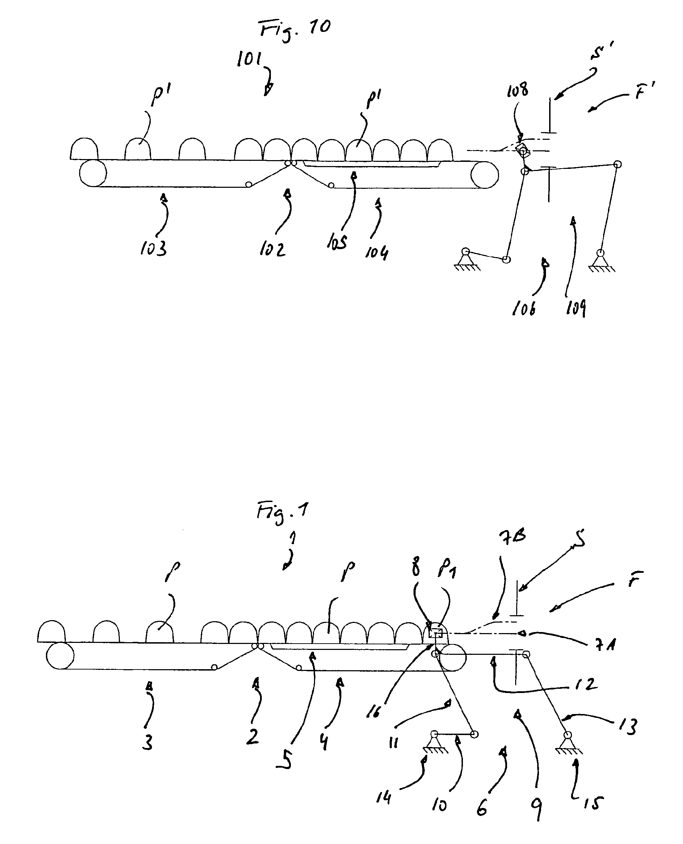

Die Figuren 1 bis 5 zeigen eine erste Ausführungsform einer Produktzuführung 1 in unterschiedlichen "Momentaufnahmen" der Bewegung der Ergreifung eines Produktes P und dessen Überführung an eine angedeutete Falteinrichtung F einer Verpackungsmaschine.

Die Produktzuführung 1 umfasst einen Förderer 2, der wiederum ein schnell laufendes Stauband 3 und ein auf das Stauband 3 folgendes langsamer laufendes Zuteilband 4 umfasst. Sowohl das Stauband 3 als auch das Zuteilband 4 sind endlos umlaufende Förderbänder.

Somit werden die Produkte P in Reihe "auf Stoß" lückenlos hintereinander angeordnet. Die erste Bandstufe, das Stauband 3, nimmt kontinuierlich Produkte P von einem vorgeschalteten (nicht dargestellten) Zuführsystem entgegen und transportiert die Produkte P bis zur zweiten Bandstufe, dem Zuteilband 4. Die konstante Geschwindigkeit der ersten Bandstufe 3 ist dabei größer als die der zweiten Stufe 4 (geregelte Geschwindigkeit).

Hierdurch wird gewährleistet, dass auf dem Zuteilband die Produkte P lückenlos auf Kontakt zueinander liegen, also gestaut werden, so dass das komplette Zuteilband 4 mit Produkten P belegt ist.

Der Produktstau ragt zurück bis auf das Stauband 3. Das Stauende befindet sich dann zwischen festgelegten und sensorisch erfassten Grenzwerten während des kontinuierlichen Betriebs. Die Produktzuführung umfasst ferner eine nicht dargestellte Sensorik und damit gekoppelte Regelung für die Bandgeschwindigkeit des Zuteilbands 4, um die notwendige Produktlage für die Entnahme zu erreichen.

Die Regelung des Zuteilbandes 4 erfolgt in Abhängigkeit von der pro Arbeitstakt zu fördernden Produktlänge, d.h. der zurückzulegende Weg entspricht der Produktlänge, da alle Produkte P lückenlos auf Kontakt liegen. Durch Längentoleranzen abweichend vom Nennmaß wird eine Nachregelung erforderlich, wodurch entweder die gesamte Produktformation auf dem Zuteilband 4 etwas beschleunigt oder verzögert wird. Hierzu dient die Sensorik, die ein sensorisches Meßsystem umfasst, welches die Lage des jeweiligen ersten (und zu entnehmenden) Produktes P1 erfasst und eine entsprechende Nachregelung der 2. Bandstufe (Zuteilband) veranlasst. Hierbei kommt ein servogeregelter Motor zum Einsatz. Die Geschwindigkeit des Zuteilbandes 4 ist in jedem Betriebszustand (auch bei Nachregelung) geringer als die des Staubandes 3, da es sonst zum Stauabriss kommt. Durch die Regelung wird gewährleistet, dass das zu entnehmende Produkt immer taktsynchron zum Verpackungsmaschinentakt, die im Gegensatz zur kontinuierlichen Produktzuführung 1 intermittierend arbeitet, positioniert und gefördert wird.

Das Zuteilband 4 ist als Lochband ausgeführt und mit einer Ansaugvorrichtung 5 für die Erzeugung eines Vakuums unterhalb versehen. Somit werden die Produkte P an das Zuteilband angesaugt und werden nicht durch die nachschiebenden Produkte P des Staubandes 3 verschoben und die Produkte P weisen gemeinsam mit dem Zuteilband 4 die gleiche Geschwindigkeit auf, was für ein sicheres Entnehmen wichtig ist.

Die Ansaugvorrichtung 5 erstreckt sich nicht über die gesamte Länge des Zuteilbandes 4, sondern beginnt an der Anschlussstelle zum Stauband 3 und endet vor der Stelle der Ergreifung des ersten Produktes P1 durch die Greifeinheit 6 am anderen Ende, so dass das zu ergreifende Produkt P1 nur noch locker aufliegt.

Die Greifeinrichtung 6 ist eine Einfachgreifeinrichtung, die ausgebildet ist, um eine Hin-und-Her-Bewegung auszuführen, die durch den Pfeil 7 angedeutet ist.

Während oder innerhalb der dieser Hin-und-Her-Bewegung bewegt sich die Greifeinrichtung 6 zunächst mit gleicher Geschwindigkeit parallel dem zu ergreifenden ersten Produkt P1 der Reihe (Synchronbewegung).

Das Produkt P1 wird dann während dieser Synchronbewegung durch die Greifeinheit 6 ergriffen, wozu die Greifeinrichtung 6 zwei zangenartig gegenüberliegend angeordnete und aufeinander zu bewegliche Greifbacken 8 aufweist, die das Produkt P1 zwischen sich klemmend aufnehmen.

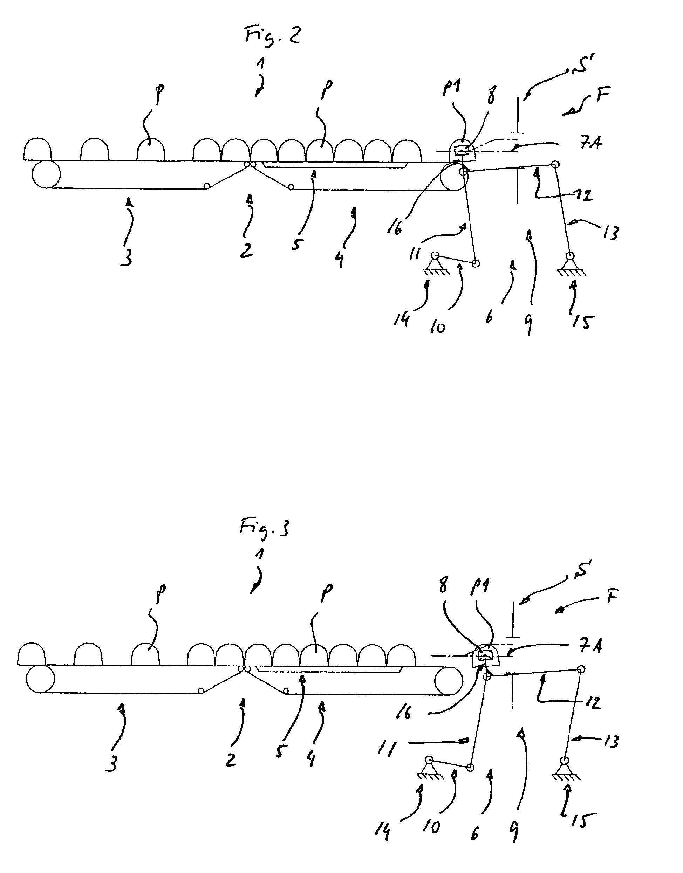

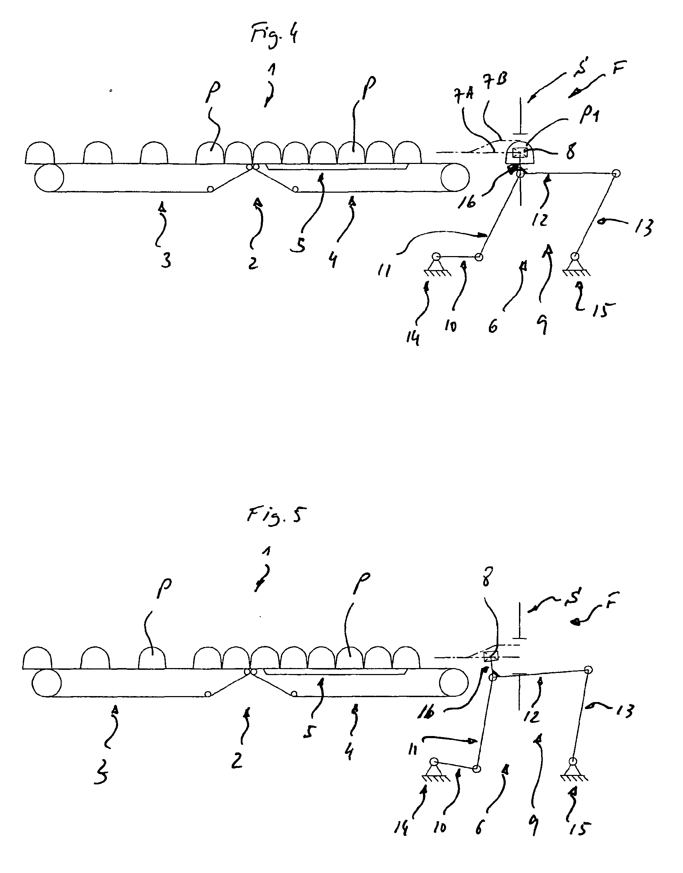

Die Greifeinrichtung 6 nimmt nun das gehaltene Produkt P1 in Bewegungsrichtung nach vorn von den nachfolgenden Produkten P bzw. dem Zuteilband 4 in einer etwa horizontalen Bewegung weg (vgl. Figuren 2 und 3). Die Ausrichtung des Produktes P1 bleibt dabei im Wesentlichen unverändert bis auf eine leichte zwischenzeitliche Neigung in den Zwischenstellungen der Überführungsbewegung (vgl. Figuren 2 und 3), die jedoch an deren Ende "ausgeglichen" ist (vgl. Figur 4).

Die Greifeinheit 6 bewegt sich mit dem gehaltenen Produkt P1 weiter zur in einer Linie mit dem Zuteilband 4 angeordneten Falteinrichtung F und übergibt das Produkt P1 dann an diese, die durch zwei schematisch dargestellte Stempel S angedeutet ist.

Anschließend wird die Hin-und-Her-Bewegung durch Rückkehr der leeren Greifeinheit 6 in die Ausgangslage für das nächste Produkt vollendet, wobei sie quasi eine Umkehr des bisher durchgeführten Bewegungsverlaufs vollführt (vgl. Figur 5).

Um die beschriebene Bewegung durchzuführen umfasst die Greifeinrichtung 6 einen mehrhebligen Mechanismus, der beispielsweise ein fünfgliedriges Getriebe 9 ausbildet.

Das Getriebe 9 umfasst dazu jeweils pro Greifbacke 8 vier gelenkig miteinander verbundene Hebel 10, 11, 12 und 13.

Hebel 10 (Antriebshebel 1) ist dabei einerseits an einem Festlager 14 (Antriebspunkt 1) drehbar und andererseits an dem folgenden Hebel 11 drehbar verbunden. Der Hebel 11 (Koppel) wiederum ist mit dem Hebel 12 (Koppel) drehbar verbunden, der wiederum mit dem Hebel 13 10 (Antriebshebel 2) drehbar verbunden ist. Der Hebel 13 ist mit seinem anderen Ende wiederum an einem Festlager 15 (Antriebspunkt 2) drehbar verbunden.

Die Hebel 11 und 13 besitzen vorteilhaft die gleiche Länge und der Abstand der Festlager 14 und 15 entspricht der Länge der Hebel 10 und 12 in der Summe, Am Hebel 12 ist jeweils die Greifbacke 8 so über einen weiteren Hebel 16 starr miteinanter verbunden. Alternativ könnte auch hier eine drehbare Lagerung ausgeführt werden, um die oben beschriebene Neigung zu verhindern.

Somit verlaufen die Hebel 10 und 12 sowie die Hebel 11 und 13 in den in Figuren 1 und 4 dargestellten Anfangs- bzw. Endpositionen parallel. In den Zwischenstellungen der Figuren 2, 3 und 5 wird diese Parallelität insbesondere bezüglich der Hebel 10 und 12 ausgehoben", so dass das die Greifbacken 8 und somit das Produkt P1 dem etwa geradlinigen horizontalen Pfad 7A folgt.

Alternativ kann die Steuerung der Hebel 10, 11, 12 und 13 so vorgenommen werden, dass der zusätzlich eine vertikale Bewegungskomponente aufweisende Pfad 7B durchlaufen wird. Dies ist insbesondere dann von Vorteil, wenn das Produkt P1 angehoben werden muss, um z.B. an einen veränderten Punkt in die Falteinrichtung zu positionieren.

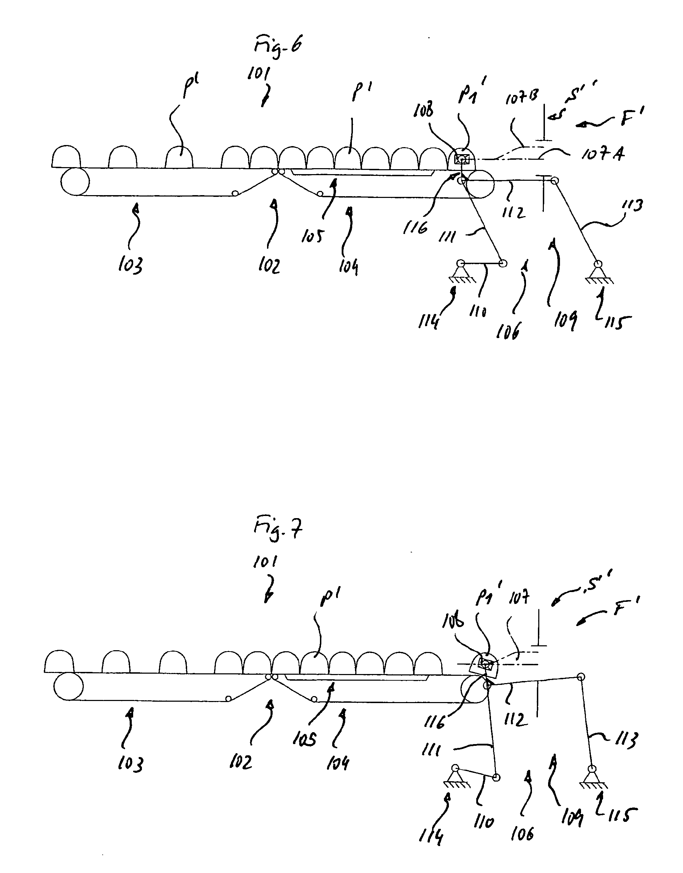

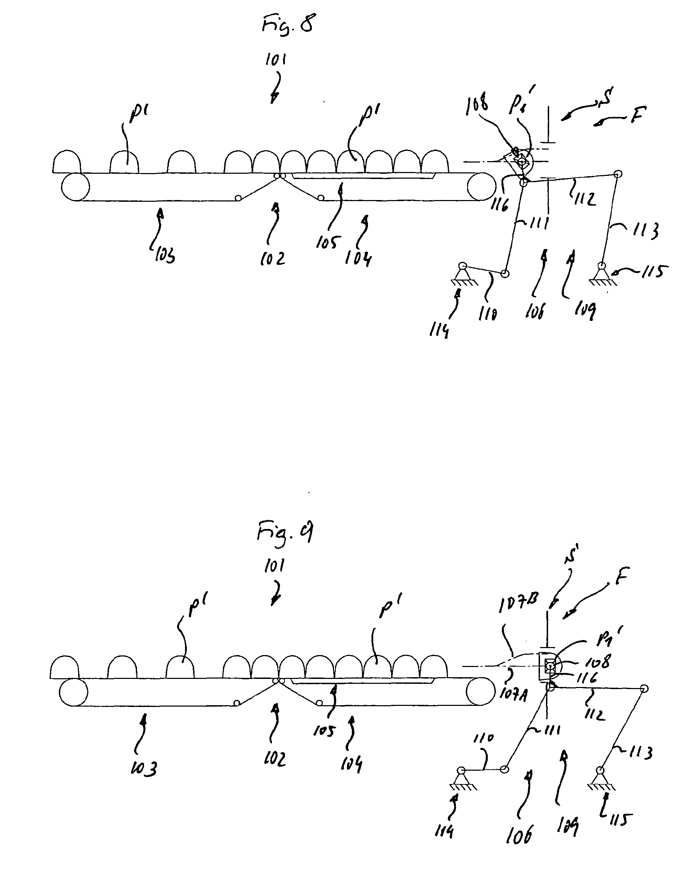

Die in den Figuren 6 bis 10 dargestellte zweite Ausführungsform einer Produktzuführung 101 unterscheidet sich im Wesentlichen von der soeben beschriebenen lediglich dadurch, dass die entsprechende Greifeinheit 106 eine um eine horizontale Achse drehbar ausgestaltete Greifbacken 108 aufweist. Somit kann das Produkt P1' während der Überführungsbewegung von dem Zuteilband 104 zu der Falteinrichtung F' gedreht werden. Vorliegend wird das Produkt P1' um 90° gedreht, also "auf die Seite" gelegt (vgl. Figur 9).

Ansonsten entsprechen sich die Ausführungsbeispiele, so dass die sich entsprechenden Teile mit einem um 100 erhöhten bzw. apostrophiertem Bezugzeichen bezeichnet werden.

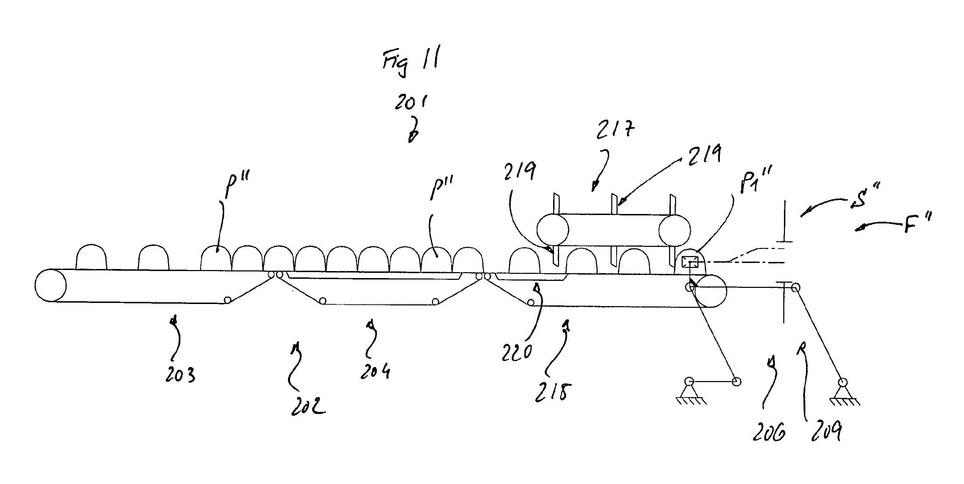

Die in der Figur 11 dargestellte weitere Ausführungsform einer Produktzuführung 201 unterscheidet sich im Wesentlichen von den oben beschriebenen lediglich dadurch, dass als Förderer 202 eine Kombination aus einem Bandförderer 203, 204, der wie oben aus einem Stauband 203 und einem Zuteilband 204 besteht, und einer Förderkette 217 mit Kettenmitnehmern 219 eingesetzt wird.

Die Produktvereinzelung erfolgt durch ein dem Zuteilband 204 nachgeordneten und vakuumunterstützten 220 Beschleunigerband 218, welches eine höhere Geschwindigkeit als das Zuteilband 204 aufweist und welches die "auf Stoß" liegenden Produkte P" definiert auseinander zieht und zwischen entsprechende Kettenmitnehmer 219 positioniert.

Die Kettengeschwindigkeit ist wiederum höher als die des Beschleunigerbandes 218, wodurch dann die Produkte P" vereinzelt an den Kettenmitnehmern 219 angelegt werden und durch diese kontinuierlich weitergeschoben werden.

Die Produkte P" weisen in diesem Fall konstante Abstände zueinander auf. Das jeweils vorderste Produkt P1" in der Förderkette 217 wird von der Greifeinheit 206 in der kontinuierlichen Bewegung gegriffen und dann nach vom weg vom Kettenmitnehmer 218 weggezogen.

Ansonsten entsprechen sich die Ausführungsbeispiele, so dass hier die sich entsprechenden Teile mit einem um 200 erhöhten bzw. doppelt apostrophiertem Bezugzeichen bezeichnet werden.

## Patentansprüche

1. Produktzuführung (1, 101, 201) für die Zuführung von kleinstückigen Produkten (P, P', P"), wie Schokoladen oder ähnlichen Süßwaren, zu einer Falteinrichtung (F, F', F") einer Verpackungsmaschine
mit einem kontinuierlichen Produktförderer (2, 102, 202), auf dem die Produkte (P, P', P") zumindest in einem Bereich in Reihe gleichmäßig hintereinander mit oder ohne Abstand angeordnet sind, und einer zangenartigen Greifeinrichtung (6, 106, 206) für das Ergreifen eines Produktes (P, P', P") an einer vorbestimmten Position auf dem Förderer (2, 102, 202) aus der Bewegung heraus und dessen Überführung an die Falteinrichtung (F, F', F"), wobei
die Greifeinrichtung eine Einfachgreifeinrichtung (6, 106, 206) ist, die zur Ausführung einer Bewegung ausgestaltet ist, innerhalb derer die Greifeinrichtung sich zunächst mit gleicher Geschwindigkeit parallel dem zu ergreifenden ersten Produkt (P, P', P") der Reihe bewegt (Synchronbewegung), das Produkt während dieser Synchronbewegung ergreift, das Produkt dann an die Falteinrichtung (F, F', F") übergibt, **dadurch gekennzeichnet, dass** die Einfachgreifeinrichtung ausgebildet ist, um eine Hin-und-Her-Bewegung (7A, B; 107A, B; 207A, B) auszuführen, innerhalb derer die Greifeinrichtung (6, 106, 206) in die Ausgangslage für das nächste Produkt zurückkehrt.

2. Produktzuführung nach Anspruch 1, **dadurch gekennzeichnet, dass** die Greifeinrichtung einen mehrhebligen Mechanismus (10, 11, 12, 13; 110, 111, 112, 113; 210, 211, 212, 213) umfasst, der ein mindestens fünfgliedriges Getriebe (9, 109, 209) derart ausbildet, dass im Wesentlichen eine horizontale, insbesondere lineare, Übergabebewegung (7A, 107A, 207A) des ergriffenen Produktes in Verlängerung der Förderbewegung erfolgt.

3. Produktzuführung nach Anspruch 1 oder 2, **dadurch gekennzeichnet, dass** die Greifeinrichtung zwei zangenartig gegenüberliegende angeordnete Greifbacken (8, 108, 208) aufweist, die um eine horizontale Achse drehbar ausgestaltet sind.

4. Produktzuführung nach einem der vorhergehenden Ansprüche, **dadurch gekennzeichnet, dass** eine Regelung für die Geschwindigkeit des Förderers (2, 102, 202) und/oder der Greifeinrichtung (6, 106, 206) vorgesehen ist.

5. Produktzuführung nach einem der vorhergehenden Ansprüche, **dadurch gekennzeichnet, dass** der Förderer (2, 102, 202) ein zweiteiliger Bandförderer (3, 4; 103, 104; 203, 204) ist.

6. Produktzuführung nach Anspruch 5, **dadurch gekennzeichnet, dass** der Förderer ein schnell laufendes Stauband (3, 103, 203) und ein auf das Stauband folgendes langsamer laufendes Zuteilband (4, 104, 204) umfasst.

7. Produktzuführung nach einem der vorhergehenden Ansprüche, **dadurch gekennzeichnet, dass** der Bereich des Produktförderers, auf dem die Produkte in Reihe "auf Stoß" lückenlos hintereinander angeordnet sind, insbesondere das Zuteilband, mit einer Ansaugvorrichtung (5, 105, 205) für die Erzeugung eines Vakuums versehen ist.

8. Produktzuführung Anspruch 7, **dadurch gekennzeichnet, dass** die Ansaugvorrichtung (5, 105, 205) vor der Stelle der Ergreifung des Produktes endet.

9. Produktzuführung nach einem der vorhergehenden Ansprüche 2 bis 8, **dadurch gekennzeichnet, dass** der Greifermechanismus derart ausbildet ist, dass die Übergabebewegung des ergriffenen Produktes auch einen vertikalen Bewegungsanteil (7B, 107B, 207B) aufweisen kann.

10. Anordnung einer Falteinrichtung (F, F', F") und einer Produktzuführung (1, 101, 201) nach einem der vorhergehenden Ansprüche in einer Verpackungsmaschine, wobei die Produktzuführung ausgestaltet ist, um die Produkte (P, P', P") an die nachgeschaltete Falteinrichtung (F, F', F") zu übergeben.

11. Verfahren für die Zuführung von kleinstückigen Produkten (P, P', P"), wie Schokoladen oder ähnlichen Süßwaren, zu einer Falteinrichtung (F, F', F") einer Verpackungsmaschine, bei dem die Produkte (P, P', P") auf einem kontinuierlichen Produktförderer 2, 102, 202), auf dem die Produkte zumindest in einem Bereich in Reihe gleichmäßig hintereinander mit oder ohne Abstand angeordnet sind und gefördert werden,
das erste Produkt (P, P', P") der Reihe von einer zangenartigen Greifeinrichtung (6, 106, 206) an einer vorbestimmten Position auf dem Förderer (2, 102, 202) aus der Bewegung heraus ergriffen und an die Falteinrichtung (F, F', F") übergeben wird, wobei
die Greifeinrichtung eine Bewegung ausführt, innerhalb derer die Greifeinrichtung (6, 106, 206) sich zunächst mit gleicher Geschwindigkeit parallel zu dem zu ergreifenden ersten Produkt (P, P', P") der Reihe bewegt (Synchronbewegung), das Produkt während dieser Synchronbewegung ergreift, das Produkt dann an die Falteinrichtung (F, F', F") übergibt, **dadurch gekennzeichnet, dass** die Greifeinrichtung eine Einfachgreifeinrichtung (6, 106, 206) ist, die eine zyklische Hin-und-Her-Bewegung (7A, 7B; 107A, 1078; 207A, 207B) ausführt, innerhalb derer sie in die Ausgangslage für das nächste Produkt zurückkehrt.

12. Verfahren nach Anspruch 11, **dadurch gekennzeichnet, dass** die Greifeinrichtung im Wesentlichen eine horizontale Übergabebewegung (7A, 107A, 207A) mit dem ergriffenen Produkt in Verlängerung der Förderbewegung ausführt.

13. Verfahren nach Anspruch 11 oder 12, **dadurch gekennzeichnet, dass** die Produkte in der Greifeinrichtung um eine horizontale Achse drehbar sind.

14. Verfahren nach einem der vorhergehenden Ansprüche 11 bis 13, **dadurch gekennzeichnet, dass** die Geschwindigkeit des Förderers und/oder der Greifeinrichtung regelbar ist.

15. Verfahren nach einem der vorhergehenden Ansprüche 12 bis 14, **dadurch gekennzeichnet, dass** die Greifeinrichtung zusätzlich zu der horizontalen Übergabebewegung auch eine vertikale Bewegung (7B, 107B, 207B) bei der Übergabe ausführt.

## Claims

1. Product feeding system (1, 101, 201) for feeding products (P, P', P") in the form of small units, such as chocolates or similar confectionery, to a folding arrangement (F, F', F") of a packaging machine, having a continuous product conveyor (2, 102, 202) on which the products (P, P', P") are evenly arranged one behind the other in a row, spaced apart or not spaced apart, at least in one region, and having a pincer-like gripping arrangement (6, 106, 206) for extracting a product (P, P', P") from the movement at a predetermined position on the conveyor (2, 102, 202) and transferring it to the folding arrangement (F, F', F"), the gripping arrangement being a single gripping arrangement (6, 106, 206) which is designed to perform a movement in the course of which the gripping arrangement first moves parallel to the first product (P, P', P") to be gripped in the row, at the same speed thereas (a synchronous movement), takes hold of the product during this synchronous movement, and then transfers the product to the folding arrangement (F, F', F"), **characterised in that** the single gripping arrangement is designed to perform a reciprocating movement (7A, B; 107A, B; 207A, B) in the course of which the gripping arrangement (6, 106, 206) returns to the starting position for the next product.

2. Product feeding system according to claim 1, **characterised in that** the gripping arrangement comprises a multi-link mechanism (10, 11, 12, 13; 110, 111, 112, 113; 210, 211, 212, 213), which forms an at least five-bar linkage (9, 109, 209) in such a way that, in essence, a horizontal, and in particular linear, movement (7A, 107A, 207A) to transfer the product takes place as an extension of the conveying movement.

3. Product feeding system according to claim 1 or 2, **characterised in that** the gripping arrangement has two gripping jaws (8, 108, 208) which are arranged opposite one another after the fashion of pincers and which are designed to be rotatable on a horizontal axis.

4. Product feeding system according to one of the preceding claims, **characterised in that** a regulating system is provided for the speed of the conveyor (2, 102, 202) and/or of the gripping arrangement (6, 106, 206).

5. Product feeding system according to one of the preceding claims, **characterised in that** the conveyor (2,102, 202) is a two-part belt conveyor (3, 4; 103, 104; 203, 204).

6. Product feeding system according to claim 5, **characterised in that** the conveyor comprises a fast-running tailback-buildup belt (3, 103, 203) and a slower-running apportioning belt (4, 104, 204) which follows the tailback-buildup belt (4, 104, 204).

7. Product feeding system according to one of the preceding claims, **characterised in that** the region of the product conveyor on which the products are arranged one behind the other in abutment in an uninterrupted row, and in particular the apportioning belt, is provided with a suction arrangement (5, 105, 205) to generate a vacuum.

8. Product feeding system according to claim 7, **characterised in that** the suction arrangement (5, 105, 205) ends before the point at which the product is taken hold of.

9. Product feeding system according to one of preceding claims 2 to 8, **characterised in that** the gripper mechanism is so designed that the movement to transfer the product which has been taken hold of may also have a vertical component (7B, 107B, 207B.

10. Arrangement of a folding arrangement (F, F', F") and of a product feeding system (1, 101, 201) according to one of the preceding claims in a packaging machine, the product feeding system being designed to transfer the products (P, P', P") to the folding arrangement (F, F', F") which is positioned downstream.

11. Method of feeding products (P, P', P") in the form of small units, such as chocolates or similar confectionery, to a folding arrangement (F, F', F") of a packaging machine, in which the products (P, P', P") are fed on a continuous product conveyor (2, 102, 202) on which the products are evenly arranged, and are conveyed, one behind the other in a row, spaced apart or not spaced apart, at least in one region, the first product (P, P', P") in the row is extracted from the movement by a pincer-like gripping arrangement (6, 106, 206) at a predetermined position on the conveyor (2, 102, 202) and is transferred to the folding arrangement (F, F', F"), the gripping arrangement performing a movement in the course of which the gripping arrangement (6, 106, 206) first moves parallel to the first product (P, P', P") to be gripped in the row, at the same speed thereas (a synchronous movement), taking hold of the product during this synchronous movement, and then transferring the product to the folding arrangement (F, F', F"), **characterised in that** the gripping arrangement is a single gripping arrangement (6, 106, 206) which performs a cyclic reciprocating movement (7A, 7B; 107A, 107B; 207A, 207B) in the course of which it returns to the starting position for the next product.

12. Method according to claim 11, **characterised in that** the gripping arrangement performs in essence a horizontal transferring movement (7A, 107A, 207A), together with the product which has been taken hold of, as an extension of the feeding movement.

13. Method according to claim 11 or 12, **characterised in that** the products can be rotated on a horizontal axis in the gripping arrangement.

14. Method according to one of preceding claims 11 to 13, **characterised in that** the speed of the conveyor and/or of the gripping arrangement can be regulated.

15. Method according to one of preceding claims 12 to 14, **characterised in that**, in addition to the horizontal transferring movement, the gripping arrangement also performs a vertical movement (7B, 107B, 207B) in the course of the transfer.

## Revendications

1. Amenée de produits (1, 101, 201) destinée à amener des produits (P, P', P") en petits morceaux, tels que du chocolat ou des produits sucrés similaires, à un dispositif de pliage (F, F', F") d'une machine d'emballage, ladite amenée de produits comportant
un transporteur de produits en continu (2, 102, 202) sur lequel les produits (P, P', P") sont disposés au moins dans une région en rangée de façon régulière l'un derrière l'autre avec ou sans espacement, et un dispositif de préhension (6, 106, 206) de type tenaille destiné à prendre un produit (P, P', P") à une position prédéterminée sur le transporteur (2, 102, 202) pour le sortir et le transférer au dispositif de pliage (F, F', F''),
le dispositif de préhension étant un dispositif de préhension simple (6, 106, 206) qui est conformé pour effectuer un mouvement à l'intérieur duquel le dispositif de préhension se déplace tout d'abord à une même vitesse parallèlement au premier produit à prendre (P, P', P") de la rangée (mouvement synchrone), prend le produit pendant ce mouvement synchrone, transfère ensuite le produit au dispositif de pliage (F, F', F''), **caractérisée en ce que** le dispositif de préhension simple est conformé pour effectuer un mouvement de va-et-vient (7A,B ; 107A,B ; 207A,B) à l'intérieur duquel le dispositif de préhension (6, 106, 206) retourne dans la position de départ pour le prochain produit.

2. Amenée de produit selon la revendication 1, **caractérisée en ce que** le dispositif de préhension comporte un mécanisme à levier multiple (10, 11, 12, 13 ; 110, 111, 112, 113 ; 210, 211, 212, 213) qui forme une chaîne cinématique (9, 109, 209) à au moins cinq éléments de sorte que sensiblement un mouvement de transfert horizontal, notamment linéaire, (7A,
107A, 207A) du produit pris est effectué dans le prolongement du mouvement du transporteur.

3. Amenée de produit selon la revendication 1 ou 2, **caractérisée en ce que** le dispositif de préhension comporte deux mâchoires de préhension (8, 108, 208) qui sont disposées l'une en face de l'autre à la manière d'une tenaille et qui sont conformées de manière à pouvoir tourner autour d'un axe horizontal.

4. Amenée de produit selon l'une des revendications précédentes, **caractérisée en ce qu'**il est prévu une régulation de la vitesse du transporteur (2, 102, 202) et/ou du dispositif de préhension (6, 106, 206).

5. Amenée de produit selon l'une des revendications précédentes, **caractérisée en ce que** le transporteur (2, 102, 202) est un transporteur à bande (3, 4 ; 103, 104 ; 203, 204) constitué de deux parties.

6. Amenée de produit selon la revendication 5, **caractérisée en ce que** le transporteur comporte une bande d'accumulation (3, 103, 203) à défilement rapide et une bande de distribution (4, 104, 204) à défilement plus lent qui fait suite à la bande d'accumulation.

7. Amenée de produit selon l'une des revendications précédentes, **caractérisée en ce que** la région du transporteur de produit, sur laquelle les produits sont disposés en rangée l'un derrière l'autre « de façon jointive » sans interstices, notamment la bande de distribution, est dotée d'un dispositif d'aspiration (5, 105, 205) destiné à générer une dépression.

8. Amenée de produit selon la revendication 7, **caractérisée en ce que** le dispositif d'aspiration (5, 105, 205) se termine en amont de l'emplacement où le produit est pris.

9. Amenée de produit selon l'une des revendications précédentes 2 à 8, **caractérisée en ce que** le mécanisme de préhension est conformé de telle sorte que le mouvement de transfert du produit pris peut également comporter une portion de mouvement verticale (7B, 107B, 207B).

10. Agencement d'un dispositif de pliage (F, F', F") et d'une amenée de produit (1, 101, 201) selon l'une des revendications précédentes dans une machine d'emballage, l'amenée de produit étant conformé pour transférer les produits (P, P', P") au dispositif de pliage (F, F', F") placé en aval.

11. Procédé pour amener des produits (P, P', P") en petits morceaux, tels que du chocolat ou des produits sucrés similaires, à un dispositif de pliage (F, F', F") d'une machine d'emballage, dans lequel les produits (P, P', P") sont transportés sur un transporteur de produits en continu (2, 102, 202) sur lequel les produits sont disposés au moins dans une région en rangée de façon régulière l'un derrière l'autre avec ou sans espacement,
le premier produit (P, P', P") de la rangée est pris par un dispositif de préhension (6, 106, 206) de type tenaille à une position prédéterminée sur le transporteur (2, 102, 202) pour le sortir et est transféré au dispositif de pliage (F, F', F"),
le dispositif de préhension effectue un mouvement à l'intérieur duquel le dispositif de préhension (6, 106, 206) se déplace tout d'abord à une même vitesse parallèlement au premier produit à prendre (P, P', P") de la rangée (mouvement synchrone), prend le produit pendant ce mouvement synchrone, transfère ensuite le produit au dispositif de pliage (F, F', F''), **caractérisé en ce que** le dispositif de préhension est un dispositif de préhension simple (6, 106, 206) qui effectue un mouvement de va-et-vient cyclique (7A, 7B ; 107A, 107B ; 207A, 207B) à l'intérieur duquel il retourne dans la position de départ pour le prochain produit.

12. Procédé selon la revendication 11, **caractérisé en ce que** le dispositif de préhension effectue sensiblement un mouvement de transfert horizontal (7A, 107A, 207A) avec le produit pris dans le prolongement du mouvement du transporteur.

13. Procédé selon la revendication 11 ou 12, **caractérisé en ce que** les produits dans le dispositif de préhension sont aptes à tourner autour d'un axe horizontal.

14. Procédé selon l'une des revendications 11 à 13, **caractérisé en ce que** la vitesse du transporteur et/ou du dispositif de préhension est réglable.

15. Procédé selon l'une des revendications précédentes 12 à 14, **caractérisé en ce que** le dispositif de préhension effectue en plus du mouvement de transfert horizontal également un mouvement vertical (7B, 107B, 207B) lors du transfert.
